(19) Europäisches Patentamt
European Patent Office
Office européen des brevets

(11) **EP 1 859 687 B1**

(12) **EUROPEAN PATENT SPECIFICATION**

(45) Date of publication and mention of the grant of the patent:
**08.11.2017 Bulletin 2017/45**

(51) Int Cl.:
*C08B 30/00* (2006.01)   *C08B 31/00* (2006.01)
*A23L 29/219* (2016.01)   *A23L 7/13* (2016.01)
*A23P 30/20* (2016.01)

(21) Application number: **07010355.1**

(22) Date of filing: **24.05.2007**

(54) **Stable starches for contributing dietary fiber to food compositions**

Stabile Stärke zur Hinzufügung von Ballaststoffen zu Lebensmittelzusammensetzungen

Amidons stables pour contribuer aux fibres alimentaires des compositions alimentaires

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.05.2006 US 420510**
**09.05.2007 US 801181**

(43) Date of publication of application:
**28.11.2007 Bulletin 2007/48**

(73) Proprietor: **CORN Products Development Inc.**
**Westchester, IL 60154 (US)**

(72) Inventors:
• **Brown, Ian Lewis**
**Gymea Bay, NSW 2227 (AU)**

• **Okoniewska, Monika**
**Princeton, New Jersey 08540 (AU)**
• **Billmers, Robert L.**
**Stockton, New Jersey 08559 (US)**

(74) Representative: **Held, Stephan et al**
**Meissner Bolte Patentanwälte**
**Rechtsanwälte Partnerschaft mbB**
**Widenmayerstraße 47**
**80538 München (DE)**

(56) References cited:
**EP-A1- 0 616 779      EP-A1- 1 629 728**
**WO-A-2006/020806    WO-A2-99/64508**
**US-A- 4 960 604       US-A- 5 902 410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a method of maintaining a high total dietary fiber content as indicated in claim 1. The modified starches as indicated are useful to increase the dietary fiber content of food compositions, particularly extruded food compositions, fried foods, and cultured dairy products.

Dietary fiber is an important component of the diet and one in which many diets are deficient. One reason for this deficiency today is that many consumers find dietary fibers unpalatable. Resistant starches (RS), which many consumers find more palatable, unfortunately do not retain their high dietary fiber content under harsh processing conditions, resulting in products with less dietary fiber than theoretically anticipated. Many foods are subjected to harsh processing conditions, such as homogenization of high moisture food formulations including puddings and yogurts and further pasteurization at temperature 70°C or higher, retorting where temperature is at 121°C for prolonged period of time, and/or extrusion of low moisture food products including snacks and breakfast cereals. As harsh processing is used to produce a number of common food compositions, this has been seen as a major impediment to the adoption and use of dietary fibers in such processed food compositions.

In order to keep the total dietary fiber content high, either alternative sources of fiber have been used, or the amount of resistant starch has been increased to allow for such processing loss. Unfortunately, alternative sources of fiber often do not provide the same health benefits which are recognized for high fiber resistant starches or have a negative effect on final product functional properties or present a need to significantly change processing conditions. Further, use of high amounts of resistant starch can be deleterious to the organoleptic properties of the food product.

Surprisingly, it has now been discovered that by using certain modified starches, food compositions may be subjected to harsher processing conditions while retaining substantial amounts of dietary fiber. Further, some of these modified starches may improve the organoleptic properties of the food composition.

SUMMARY OF THE INVENTION

The present invention relates to a method of maintaining a high total dietary fiber content as indicated in claim 1. Modified resistant starches of the type known in the art as RS4 are useful to increase the dietary fiber content of processed food compositions. By using the modified starches as indicated in claim 1, food compositions may be processed using harsh processing conditions while retaining substantial amounts of the dietary fiber from the RS4.

As used herein, the term modified is intended to mean using methods known in the art including dextrinization selected from the group consisting of acid/heat and alkali/heat dextrinization, and chemical modification using reagents selected from the group consisting of propylene oxide/phosphorus oxychloride (PO/ POCl3), propylene oxide/sodium trimetaphosphate (PO/STMP), propylene oxide/sodium trimetaphosphate/sodium tripolyphosphate (PO/STMP/STPP), adipic acetic anhydride (Ad/Ac), acid converted/propylene oxide (H+/PO), propylene oxide (PO), acetic anhydride (AA), butyric anhydride (BA), and propionic anhydride (PA), and succinic anhydride (SA).

Granular, as used herein, is intended to mean not gelatinized or dispersed by any chemical or physical process. Granular starches can be determined using microscopy by the presence of birefringence (Maltese cross) under polarized light. Granular starches are also not significantly soluble in water below their gelatinization temperature.

Non-granular starches, as used herein, are those that are no longer granular, such as those that have been treated or processed to be readily soluble in water (CWS) at below their gelatinization temperature. Some starches can be processed to become soluble and then are allowed to retrograde so as to form particles (crystallites) that are no longed soluble in water below their gelatinization point, but are also non-granular.

As used herein, dietary fiber is intended to mean both soluble and insoluble dietary fiber and is quantitatively measured by the Association of Analytical Chemists (AOAC) Method 2001.03 (Determination of Total Dietary Fiber in Selected Foods Containing Resistant Maltodextrin by Enzymatic-Gravimetric Method and Liquid Chromatography: Collaborative Study, D.T. Gordon & K. Okuma, J. AOAC, 2002, 85, 435-444).

As used herein with respect to extrusion, "moderate to severe processing conditions" is intended to mean those conditions having a Specific Mechanical Energy (SME) of at least 130 Wh/kg and a Product Temperature (PT) of at least 160°C.

"Harsh processing conditions", as used herein, means high temperature and/or high pressure and optionally high shear processing and includes without limitation extrusion, homogenization, pasteurization, ultra-high temperature (UHT) packaging, frying, and canning (retorting). Specifically, it means a temperature of greater than 100°C and/or pressure greater than 1 atmosphere (101.325 kPa).

## DETAILED DESCRIPTION OF THE INVENTION

The present invention relates to a method a indicated in claim 1, which employs a modified starch as mentioned in claim 1 to increase the dietary fiber content of processed food compositions. By using these modified starches, food compositions may be processed using harsh processing conditions while retaining substantial dietary fiber. Further, such modified starches provide dietary fiber without the negative effects on textural or organoleptic properties of the food products which are typically associated with the addition of other dietary fiber sources.

Starch, as used herein, is intended to include all starches, flours, grits and other starch containing materials derived from tubers, grain, legumes and seeds or any other native source, any of which may be suitable for use herein. A native starch as used herein, is one as it is found in nature. Also suitable are starches derived from a plant obtained by standard breeding techniques including crossbreeding, translocation, inversion, transformation or any other method of gene or chromosome engineering to include variations thereof which are typically referred to as genetically modified organisms (GMO). In addition, starch derived from a plant grown from artificial mutations and variations of the above generic composition, which may be produced by known standard methods of mutation breeding, are also suitable herein.

Typical sources for the starches are cereals, tubers, roots, legumes and fruits. The native source can be corn (maize), pea, potato, sweet potato, banana, barley, wheat, rice, oat, sago, amaranth, tapioca (cassava), arrowroot, canna, and sorghum as well as waxy or high amylose varieties thereof. As used herein, the term "waxy" or "low amylose" is intended to include a starch containing no more than about 10%, particularly no more than about 5%, most particularly no more than about 2%, by weight amylose. Also used herein, the term "high amylose" is intended to include a starch containing at least about 40%, particularly at least about 70%, most particularly at least about 80%, by weight amylose. The invention embodied within relates to all starches regardless of amylose content and is intended to include all starch sources, including those which are natural, genetically altered or obtained from hybrid breeding. In one embodiment, the starch is a high amylose starch.

The starch of this invention is modified using methods selected from the group consisting of acid/heat and alkali/heat dextrinization and/or chemical modification using reagents selected from the group consisting of propylene oxide/sodium trimetaphosphate (PO/STMP), propylene oxide/sodium trimetaphosphate/sodium tripolyphosphate (PO/STMP/STPP), adipic acetic anhydride (Ad/Ac), acid converted/propylene oxide (H+/PO), butyric anhydride (BA), and propionic anhydride (PA), and succinic anhydride (SA). In one embodiment, the starch of this invention is modified using acid/heat dextrinization and/or chemical modification using reagents selected from the group consisting of adipic acetic anhydride (Ad/Ac), acid converted/propylene oxide (H+/PO), butyric anhydride (BA), and propionic anhydride (PA), and succinic anhydride (SA). Such modifications are known in the art and are described for example in Modified Starches: Properties and Uses, Ed. Wurzburg, CRC Press, Inc., Florida (1986). The amount of modification may be varied to get the desired properties while retaining substantial dietary fiber. Starches may in addition be modified with other reagents to impact textural or functional properties other than the TDF enhancement.

The starches of this invention may be gelatinized before or after modification by using techniques known in the art. Such techniques include those disclosed for example in U.S. Patent Nos. 4,465,702, 5,037,929, 5,131,953, and 5,149,799. Also see, Chapter XXII- "Production and Use of Pregelatinized Starch", Starch: Chemistry and Technology, Vol. III- Industrial Aspects, R.L. Whistler and E.F. Paschall, Editors, Academic Press, New York 1967. Those skilled in the art understand which modifications should preferably be done in the granular or non-granular (gelatinized) state.

The starch may be purified by any method known in the art to remove starch off flavors, colors, or other undesirable components that are native to the starch or created during processing or to sanitize microbial contamination to ensure food safety. Suitable purification processes for treating starches are disclosed in the family of patents represented by EP 554 818 (Kasica et al.). Alkali washing techniques are also useful and described in the family of patents represented by U.S. 4,477,480 (Seidel) and 5,187,272 (Bertalan et al.). The starch may be purified by enzymatic removal of proteins. Reaction impurities and by-products may be removed by dialysis, filtration, centrifugation or any other method known in the art for isolating and concentrating starches.

The resultant starch is typically adjusted to the desired pH according to its intended end use. In general, the pH is adjusted to 3.0 to about 6.0. In one embodiment, the pH is adjusted to 3.5 to about 4.5, using techniques known in the art.

The starch may be recovered using methods known in the art, particularly by filtration or by drying, including spray drying, freeze drying, flash drying or air drying. In the alternative, the starch may be used in the liquid (aqueous) form.

The resultant starch is added to any food formulation prior to processing in any amount desired or effective to provide the desired dietary fiber content. The amount of dietary fiber added and used in any given food formulation may be determined to a great extent by the amount that can be tolerated from a functional standpoint. In other words, the amount of starch used generally may be up to what is acceptable in organoleptic evaluation of the food composition or can be physiologically tolerated by the consumer. In one embodiment, the starch of this invention is used in an amount of from about 1 to 50%, and in another embodiment from about 15 to 25% by weight of the food formulation.

In one embodiment, the resultant starch is substituted for at least part of the fiber of the conventional formulation.

In another embodiment, the resultant starch is substituted for at least part of the starch of the conventional formulation. The starch may be added to the formulation in the same manner as any other starch, and in one embodiment is added by mixing the starch directly into the formulation and in another by adding it in the form of a solution or dispersion.

The formulation is then subject to harsh processing known in the art to produce a food product. Such processing includes, without limitation, extrusion, homogenization, pasteurization, ultra-high temperature (UHT) packaging, frying, and canning. These processes may be conducted using any suitable equipment known in the art. In the invention, the food formulation is exposed to a temperature of greater than 100°C and/or pressure greater than 1 atmosphere (101.325 kPa).

Extrusion of the food formulation may be conducted using any suitable equipment and medium to severe process parameters known in the art. Since a large number of combinations of process parameters exist, e.g., product moisture, screw design and speed, feed rate, barrel temperature, die design, formula and length/diameter (L/d) ratios, Specific Mechanical Energy (SME) and Product Temperature (PT) have been used in the art to describe the process parameter window of the extrusion. In one embodiment, the food formulation is exposed to an SME of at least 130 Wh/kg and a PT of at least 160°C, and in another embodiment to an SME of at least about 160 Wh/kg and a PT of at least 190°C. In another embodiment, the food formulation is exposed to an SME of no greater than 500 and a PT of no greater than 220°C.

Upon exposure to harsh processing conditions, the resultant food composition retains a total dietary fiber content of at least 70% (w/w) of the pre-processed dry blend formulation, in one embodiment at least 80%, in another at least 85%, and in yet another at least 95%(w/w) of the pre-processed dry blend formulation. The resultant processed food compositions include a variety of food products including, but not limited to, cookies, biscuits, cereals, snacks, pasta, diary products, e.g. puddings, yogurts (cultured and pasteurized), ice cream and sour cream, retorted products, e.g., gravies, sauces and condiments, frozen and refrigerated foods, soups and soup mixes, processed emulsion meats, e.g., turkey roll, as well as animal food products and any other extruded or harshly processed products in which a higher fiber content is desired.

Further, the extruded composition comprising the modified starch may have improved organoleptic properties in that the bulk density is the same or may be decreased compared to the same composition made in the same way without a modified starch. Thus, the food composition may have a lighter, airier texture compared to food compositions high in other types of fiber. Alternatively stated, the starch may provide both a higher TDF value and functional benefits to the food item being created. In one embodiment, the bulk density of the composition comprising the modified starch is no greater than that without the modified starch and in another embodiment, the bulk density of the composition comprising the modified starch is at least 5% less than that without the modified starch.

Disclosed is a starch which is stabilized with propylene oxide. The resultant starch easily cooks out at a temperature significantly below 100°C, or below 80°C, and even below 65°C.

In some embodiments of the invention, the starch may show a thin to medium thick viscosity after cook, and have improved freeze-thaw stability and or be used as a fat mimetic to take advantage of any lubrication characteristics, providing unique mouthfeel.

The resultant food composition may be formulated to achieve the desired total dietary fiber content. In one embodiment, the composition is formulated to increase the total dietary fiber content by from 2 to 50%, in another embodiment 2 to 35%, in still another embodiment 3-15%, and in yet another embodiment by from 3 to 10% by weight compared to the same composition processed under the same conditions without the modified starch. In yet another embodiment, the composition is formulated such that the total dietary fiber content of the composition is at least 2% (w/w) greater, in another at least 10% (w/w) greater, in a further embodiment at least 15% (w/w) greater, in still another at least 35% (w/w) greater, and in yet another at least 50% (w/w) greater, than the same composition processed under the same conditions without the modified starch.

The food composition will additionally contain at least one other ingestible ingredient. Such ingredients include those typically used in foods, beverages and pharmaceuticals and includes water.

The compositions made using the modified starches of this invention may be fed to (ingested by) any animal, in one embodiment to mammals and in another embodiment to humans. Such compositions may contribute to the health of the animal in the same or similar manner as other food compositions which contain dietary fiber and or resistant starch, including without limitation by attenuating the glycemic and insulinemic response, reducing plasma triglycerides and cholesterol, increasing short chain fatty acids, acting as a prebiotic to increase the proliferation and/or activity of probiotic bacteria such as lactobacillus and bifidobacteria, increasing satiety, and increasing micronutrient absorption such as calcium.

Additional embodiments:

The following embodiments are presented to further illustrate and explain the present invention and should not be taken as limiting in any regard.

1. A method of maintaining a high total dietary fiber content comprising:

processing under harsh conditions a food formulation comprising a modified starch selected from the group consisting of acid/heat and/or alkali/heat dextrinization, and/or chemical modification using reagents selected from the group consisting of propylene oxide/sodium trimetaphosphate (PO/STMP), propylene oxide/sodium trimetaphosphate/sodium tripolyphosphate (PO/STMP/STPP), adipic acetic anhydride (Ad/Ac), acid converted/propylene oxide (H+/PO), butyric anhydride (BA), and propionic anhydride (PA), succinic anhydride (SA) and mixtures thereof,

resulting in a processed food composition, wherein the processed food retains a total dietary fiber content of at least 70% (w/w) of the pre-processed dry blend formulation and wherein the food formulation is subjected to processing at conditions of a temperature of greater than about 100°C and/or a pressure greater than about 1 atmosphere (101.325 kPa).

2. The method of embodiment 1, wherein the processing is extrusion under medium to severe conditions.

3. The method of embodiment 1 or 2, wherein the starch is modified by acid/heat dextrinization and/or chemical modification using reagents selected from the group consisting of adipic acetic anhydride (Ad/Ac), acid converted/propylene oxide (H+/PO), butyric anhydride (BA), and propionic anhydride (PA), and succinic anhydride (SA).

4. The method of embodiment 3, wherein the starch is modified by acid/heat dextrinization.

5. The method of embodiment 6, wherein the food formulation is processed by a process selected from the group consisting of homogenization, pasteurization, ultra-high temperature (UHT) packaging, and retorting.

6. The method of embodiment 2, wherein the food formulation is extruded at an SME of at least 130 Wh/kg and a PT of at least 160°C.

7. The method of embodiment 8, wherein the food formulation is extruded at an SME of at least 160 Wh/kg and a PT of at least 190°C.

8. The method of embodiment 1, wherein the processed food composition retains at least 85% (w/w) of the pre-processed food formulation.

9. The method of embodiment 8, wherein the processed food composition retains at least 95% (w/w) of the pre-processed food formulation.

10. The method of embodiment 2, wherein the extruded food composition has a bulk density no greater than an extruded food composition without the modified starch.

11. The method of embodiment 10, wherein the extruded food composition has a bulk density at least 5% less than an extruded food composition without the modified starch.

12. The method of embodiment 1 or 2, wherein the processed food composition has a total dietary fiber content of from 2 to 50% (w/w) greater than a processed food composition without the modified starch.

13. The method of embodiment 12, wherein the processed food composition has a total dietary fiber content of from 2 to 35% (w/w) greater than a processed food composition without the modified starch.

14. The method of embodiment 13, wherein the processed food composition has a total dietary fiber content of from 3 to 15% (w/w) greater than a processed food composition without the modified starch.

15. The method of embodiment 13, wherein the processed food composition has a total dietary fiber content of from 3 to 10% (w/w) greater than a processed food composition without the modified starch.

EXAMPLES

The following examples are presented to further illustrate and explain the present invention and should not be taken as limiting in any regard. All percents used are on a weight/weight basis.

The following test procedures are used throughout the examples -

Dietary Fiber - Dietary Fiber is quantitatively measured by the Association of Analytical Chemists (AOAC) Method 2001.03 ("Determination of Total Dietary Fiber in Selected Foods Containing Resistant Maltodextrin by Enzymatic-Gravimetric Method and Liquid Chromatography: Collaborative Study", D.T. Gordon & K. Okuma, J. AOAC, Vol. 85, pp. 435-444 (2002)).

The following products are used throughout the examples (Table 1)-

| Sample No. | Base Starch | Examples of Modifications | | | | |
|---|---|---|---|---|---|---|
| | | Chemical 1 | | Chemical 2 | | Physical |
| | | Type | Level (%) | Type | Level (%) | |
| 1[4] | Waxy Corn | Na | na | na | na | na |
| 2[4] | Waxy Corn | Propylene Oxide | 7 [1] | POCl3 | 0.013[2] | na |
| 3[4] | Waxy Corn | Propylene Oxide | 7 [1] | POCl$_3$ | 0.013 [2] | Drum Drying |
| 4[4] | Tapioca | Na | na | na | na | na |
| 5 | Tapioca | H$_2$SO$_4$ | 3 [2] | Propylene Oxide | 5.6 [1] | na |
| 6 | Tapioca | H$_2$SO$_4$ | 3 [2] | Propylene Oxide | 5.6 [1] | Dispersion & Spray Drying |
| 7 | Tapioca | Canary Dextrin | ~95% solubility | na | na | na |
| 8 | Tapioca | Solution Stable Dextrin | ~90% solubility | na | na | na |
| 9[4] | Dent Corn | Na | na | na | na | na |
| 10[4] | Dent Corn | STMP/STPP | 0.39 [3] | na | na | na |
| 11[4] | Hylon VII | Na | na | na | na | na |
| 12[4] | Hylon VII | STMP/STPP | 0.35 [3] | na | na | na |
| 13[4] | Hylon VII | Propylene Oxide | 10 [1] | na | na | na |
| 14[4] | Hylon VII | Acetyl | 7.25 [1] | na | na | na |
| 15 | Waxy Corn | Propylene Oxide | 6 [1] | H$_3$PO$_4$ | 1 [2] | Coupled Jet-Cooking & Spray Drying |
| 16 | Waxy Corn | H$_2$SO$_4$ | 2 [2] | na | na | Coupled Jet-Cooking & Spray Drying |
| 17 | Waxy Corn | Propylene Oxide | 5.6 [1] | H$_2$SO$_4$ | 2 [2] | Coupled Jet-Cooking & Spray Drying |

1) bound PO or acetyl
2) treatment level
3) bound P
4) not according to the invention

The following drying methodologies were used throughout the examples -

*Spray Drying* - Spray drying was performed on a Niro Spray Dryer with a two fluid nozzle. The starch was slurried at 20-30% (w/w) solids in water and was introduced directly into the nozzle with the feed rate of 3000-35000 psi. In the nozzle, the slurry was coming in contact with steam at120-180psi. Slurry solids, pumping rate, length of the nozzle, steam pressure, and back pressure in the nozzle were manipulated to accomplish desired degree of starch gelatinization.

*Drum Drying* - Starch was slurried at 35-40% solids and fed between rotating rollers. The rollers were rotating at 6-10 rpm and were heated by steam at 7,58-11,03 bar (110-160psig) to 110-140°C. Sheet of the cooked starch was removed from the drum by a blade, ground and sieved to form final starch powder.

*Coupled jet-cooking and spray-drying* was performed as described in the patent US 5,131,953. The process was performed at 20-30% solids and low steam pressure. The starch slurry was subjected to 80-90°C cooking temperature. The steam pressures to the cooking chamber and line pressure to the spray drier were at 6,9 bar (100 psi).

Example 1 - Preparation of Chemically Modified Starches

a) *Propylene oxide (PO) modified* (Reference) - 4 g of solid sodium hydroxide are dissolved into 750 g of tap water at 23°C and mixed until completely dissolved. 50 g of sodium sulfate is then added to the water and mixed until dissolved. The starch is then added quickly to the stirring aqueous mixture and mixed until uniform. Various levels of propylene oxide are added to the starch slurry and mixed for 1 to 2 minutes. The slurry is then transferred into a 2L plastic bottle and sealed. The bottle and contents are then placed into a preheated mixing cabinet set to 40°C and agitated for 18 hours. After the reaction is complete, the slurry is adjusted to pH 3 with dilute sulfuric acid and then allowed to mix for 30 minutes. The pH is then adjusted to between 5.5 and 6.0 with dilute sodium hydroxide solution. The starch is recovered by filtration and the starch cake is washed with water (3 x 250 ml), spread out on the bench top and allowed to air dry.

b) *Propylene oxide/phosphorus oxychloride (PO/POCl3) modified* (Reference) - Starch was added into 25% sodium sulfate solution to achieve 40% (w/w) slurry. The temperature of the slurry was increased to 40°C, pH was adjusted to 11-11.5, and chemical modification reagent was added, typically 8-15% propylene oxide. The reaction was carried for 18hours. Subsequently, the slurry was allowed to cool to room temperature and appropriate amount of crosslinking reagent was added, typically, 0.0001 - 0.1% phoshorus oxychloride. The reaction was carried for 30min at room temperature, then pH was adjusted to neutral with suitable acid. The starch was filtered, washed, and recovered by air drying.

c) *Acetic anhydride (AA) modified* (Reference) - A total of 500 grams of starch was placed in a 2L plastic beaker and slurried in 750 ml tap water. The beaker was equipped with an overhead stirrer and pH monitor capable of automatically adding a 3% sodium hydroxide solution to maintain a predetermined set point. The pH controller was set at 8.0 and the slurry adjusted to a pH of about 7.8. A dropping funnel was charged with 15 grams of acetic anhydride and set to deliver the full charge over approximately 1 hour while the pH was held at 8.0 with good agitation. After the addition of the anhydride was complete the reaction was allowed to continue for an additional 5 minutes at pH. The slurry was then filtered through Whatman #1 paper and washed with 3 x 500 ml of tap water. The resulting cake is allowed to air dry to less than 15% moisture and recovered to afford the starch acetate.

d) *Preparation of Canary Dextrin (Sample* 7) - An oil-jacketed, ribbon-type blender (a traditional dextrinizer) was charged with 100 parts of tapioca starch having a moisture content between 4 to 6% and a pH of 4.5 in a 40% solids slurry. A 1N hydrochloric acid solution was spray atomized onto the agitated starch bed until a pH of 3.2 in a 40% solids slurry was obtained. The oil jacket is heated to obtain a starch bed temperature of 185° C. in 2 to 4 hours. The maximum starch temperature was held constant for an additional 6 hours to produce a canary dextrin.

e) *Preparation of Solution Stable Dextrin (Sample* 8) - A fluid bed reactor was charged with 100 parts of tapioca starch having a moisture content of 7.4% and a pH of 4.5 at 20% solids. The starch was fluidized using substantially anhydrous air. Then the fluidized starch was acidified by adding anhydrous hydrochloric gas into the fluidizing air stream until the starch had a pH of 3.9 at 20% solids. To initiate the dextrinization process, the fluidizing air and the outer steam jacket of the reactor were heated to obtain a maximum starch temperature of 185° C. within three hours. The moisture content of the starch dropped from 7.4% to 0.0% within two hours. Once the starch reached the maximum temperature of about 185° C., time equal 0, the processing conditions described above were held for an additional 6 hours. Once 6hr time was reached, the fluidizing starch bed was cooled by lowering the air inlet temperature and adding water to the outer jacket to bring the starch to ambient temperature.

Example 2 - Preparation of Starches Crosslinked with Sodium Trimetaphosphate (STMP) and Sodium Tripolyphosphate (STPP)

3,000 ml of tap water were measured into a reaction vessel. 100g Na2SO4 were added with agitation and stirred until dissolved. With good agitation, 2,000g of corn starch was added and then 3% NaOH was added drop-wise to the slurry as needed to reach 40ml alkalinity (667g NaOH for 44.00ml alkalinity). The slurry was stirred 1 hr and the pH was recorded (pH 11.68). The temperature was adjusted to 42°C. 160g of a 99/1 STMP/STP blend was added and allowed to react for 4 hours. The final pH and temperature were recorded (pH 11.02 and 42°C). The pH was adjusted to 5.5 with 3:1 HCl (pH 5.47 using 164.99g HCl). The resultant starch case was filtered and washed twice with 3,000 ml tap water. The cake was crumbled and air dried.

Example 3 - Preparation of a Model Extruded Food Composition

The starches were evaluated in expanded snack to examine their TDF retention in food application representing a process with severe heat and shear component. Expanded products similar to corn curls were selected as a severe extrusion model system since temperature and Specific Mechanical Energy (SME) during processing of puffs is relatively high.

The formula consisted of degermed corn flour and water. The experimental samples were used to replace 20% (w/w) of degermed corn flour and were compared to a control prepared with 100% degermed corn flour. The dry formula feed rate was 100kg/hr, extruder shaft speed was 400rpm, water flow to extruder was 5.5-6.0 kg/hr. The total moisture in extruder was 15.5-16%.

Dry materials were blended in the ribbon mixer, Wenger Manufacturing, Inc., model No. 61001-000 for 10min, fed into a hoper and extruded without preconditioning. The feed rate was 100kg/hr. For the 3 barrel extruder design used, the barrel temperature profile was set to 50°C, 80°C, and 92°C and was maintained within four degree range. The SME was calculated according to a formula presented below to serve as an indicator of the mechanical shear input to the process - $\text{Torque}_{\text{Actual}}/\text{Torque}_{\text{Max}}$ x Screw $\text{Speed}_{\text{Actual}}/\text{Screw Speed}_{\text{Max}}$ x Engine Power Constant / Throughput Rate

The SME range was 130-140 Wh/kg and the measured product temperature was 160-170°C. From the extruder, expanded samples were sent to a drier. Drier temperature was set in a first zone to 130°C, and in second and third zones to 30°C. Total retention time in the drier was approximately 8 minutes. At the exit of the drier, products were collected into lined boxes and packaged to minimize atmospheric moisture pick up.

TDF of the dry blends and final products was determined using AOAC 2001.03 method. TDF retention was calculated according to the formula -

$$\text{TDF Retention (\%)} = (\text{TDF}_{\text{Extrudate}} \times 100) / \text{TDF}_{\text{Dry Blend}}$$

Example 4 - Total Dietary Fiber Retention of Food Composition (Extrudate) (Table 2)

na - not applicable 1) not according to the invention

| Sample Number | Ingredient TDF (% db) | Dry Blend TDF (%db) | Extrudate TDF (% db) | TDF Retention (%) |
|---|---|---|---|---|
| Control | na | 3 | 2 | na |
| 1[1] | 0 | 3 | 3 | na |
| 2[1] | 46 | 11 | 10 | 91 |
| 3[1] | 45 | 12 | 12 | 100 |
| 4[1] | 2 | 2 | 2 | na |
| 5 | 40 | 10 | 9 | 90 |
| 6 | 39 | 10 | 9 | 90 |
| 7 | 43 | 11 | 10 | 91 |
| 8 | 37 | 9 | 9 | 100 |
| 9[1] | 0 | 2 | 2 | na |
| 10[1] | 87 | 21 | 9 | 43 |

(continued)

| Sample Number | Ingredient TDF (% db) | Dry Blend TDF (%db) | Extrudate TDF (% db) | TDF Retention (%) |
|---|---|---|---|---|
| 11[1] | 23 | 8 | 2 | 25 |
| 12[1] | 91 | 21 | 6 | 29 |
| 13[1] | 65 | 14 | 13 | 93 |
| 14[1] | 28 | 8 | 7 | 75 |

Example 5 - Bulk Density of Food Composition

Bulk density ($D_B$) was measured by weighing (W) known volume (V) of cereals and calculating according to the formula $D_B = W / V$ and expressed in kg/m$^3$

Table 3

| Sample Number | Bulk Density (kg/m$^3$) |
|---|---|
| Control | 52 |
| 1[1] | 50 |
| 2[1] | 45 |
| 3[1] | 44 |
| 4[1] | 50 |
| 5 | 44 |
| 6 | 34 |
| 7 | 30 |
| 8 | 42 |
| 9[1] | 50 |
| 10[1] | 42 |
| 11[1] | 50 |
| 12[1] | 44 |
| 13[1] | 30 |
| 14[1] | 34 |
| 1) not according to the invention | |

Example 6 - Pudding Compositions

Modified food starch (Starch Sample 15) was tested in a pudding application, at 20% and 30% by weight in the finished pudding, to determine process tolerance compared to a control starch. Waxy maize (Starch Sample 1) is typically used in puddings and was utilized in the Control. The control was used at a relatively lower concentration at 6.75% due to viscosity limitations.

Puddings were prepared using a Vorwerk Thermomix Model TM 21. The Thermomix mimics processing conditions used for puddings by continuously mixing the batch, while keeping the temperature constant.

Table 4

| Ingredients | Percent Weigh | | |
|---|---|---|---|
| | Control Pre-mix | Pre-mix A | Pre-mix B |
| Starch Sample 1[1] | 27.72 | | |
| Starch Sample 15 | | 53.19 | 63.03 |
| Granulated Sugar | 41.07 | 26.60 | 21.00 |
| Non-fat dry milk (High Heat) | 31.21 | 20.21 | 15.97 |
| Totals | 100.00 | 100.00 | 100.00 |
| 1) not according to the invention | | | |

The above dry pre-mixes were prepared and slowly whisked into the pre-weighed amount of distilled water according to the pudding formulas below.

Table 5

| Ingredients | Percent Weight | | |
|---|---|---|---|
| | Control Pudding | Pudding A | Pudding B |
| Control Pre-mix | 24.35 | | |
| Pre-mix A | | 37.60 | |
| Pre-mix B | | | 47.60 |
| Distilled Water | 75.65 | 62.40 | 52.40 |
| Totals | 100.00 | 100.00 | 100.00 |

After the dry ingredients were hydrated, the pudding mixture ($\approx$ 800 grams) was poured into the Thermomix. The temperature setting of the Thermomix was set to 200°F (93.3°C) and the shear setting was set to 1, which is the lowest. The timer was set to 35 minutes to take into account the 10 minutes required for the pudding mixture to reach 200°F (93.3°C) [come-up time], and the hold time of 25 minutes at 200°F (93.3°C). After 35 minutes of mixing, the finished pudding was poured immediately into plastic cups and placed in the refrigerator at 40°F (4.4°C).

The puddings were stored at 40°F (4.4°C) for 24 hours before further analysis. After 24 hours, the pudding samples were freeze-dried. In order to achieve greater uniformity of drying, the pudding samples were diluted to 12.5% solids with distilled water. The diluted samples were poured into round bottom flasks and flash frozen using a dry ice-acetone bath. The samples were freeze-dried overnight using a FTS Systems Flexi-Dry™ MP bench-top freeze drier Model# FD-3-85A-MP.

Total Dietary Fiber (TDF) content of starches, dry pre-mixes, and freeze-dried pudding samples were analyzed using AOAC method 2001.03. The results were expressed on a dry basis. TDF retention was calculated according to the formulas:

**(1)**   TDF retention (%) = (TDF pudding) x 100) / TDF pre-mix

**(2)**   Post-Processing Ingredient TDF = TDF starch x TDF retention / 100

TDF and TDF retention results for puddings are listed below –

TDF and TDF Retention Results of Pudding Samples (Table 6)

| Sample | TDF Starch (% db) | TDF Pre-mix (% db) | TDF Pudding (% db) | TDF Retention (%) | Post-Processing Ingredient TDF (% db) |
|---|---|---|---|---|---|
| Control Pudding | 0.0 | 0.8 | 0.5 | N/A | N/A |
| Pudding A | 36.0 | 18.8 | 22.9 | 100 | 36.0 |
| Pudding B | 36.0 | 22.4 | 28.1 | 100 | 36.0 |

As can be seen from the above Table, the experimental puddings (A and B) not only contained substantially more total dietary fiber than the control puddings and retained the dietary fiber upon processing, but also had an actual increase in total dietary fiber.

Example 7 - Cultured Dairy Product

Modified food starches were tested in a cultured dairy product (CDP) application processed under conditions typical for yogurt to determine process tolerance.

PO-treated waxy maize is typically used in CDP's at 1 - 2% by weight; its usage level is limited by viscosity. CDP made with PO-treated waxy corn at higher inclusion levels could not be prepared due to viscosity limitations of the MicroThermics® processing unit.

Acid conversion reduces the viscosity of starch, which allows for higher starch inclusion levels in the CDP formulation, without affecting processing. Starch 16 was a CWS acid-converted waxy corn. Starch 17 was a CWS acid-converted waxy corn with 5.6% PO. Both starches were utilized at 20% by weight in the CDP application.

CDPs were prepared using a typical yogurt process:

1. Dry-blended starch and non-fat dry milk (NFDM) in Ziploc® bags according to the formulations listed in Table below:

Table 7- Cultured Dairy Product Formulations Utilized for Determination of Process Tolerance.

| Ingredients | Percent Weight | |
|---|---|---|
| | CDP with 16 | CDP with 17 |
| 16 | 20.00 | --- |
| 17 | --- | 20.00 |
| NFDM (Low Heat) | 0.50 | 0.50 |
| 1% Milk | 39.75 | 39.75 |
| 2% Milk | 39.75 | 39.75 |
| Totals | 100.00 | 100.00 |

2. Added dry blend to milk under high agitation using high-speed mixer.

3. Pre-heated mixture to 65 °C (149 °F) using MicroThermics® Heated Mixing Station with Low Level Divert.

4. Homogenized mixture at 120/30 bars (≈ 1800 psi) using MicroThermics® Laboratory In-Line Homogenizer.

5. Brought mixture to a final heat of 95 °C (203 °F) for 6 minutes using MicroThermics® UHT/HTST Laboratory-Scale Processing System (Model HVHW) with holding cabinet.

6. Collected product at 42-43 °C (108-110 °F) and inoculated with 0.2% yogurt culture.

7. Transferred inoculated mix into yogurt cups (cup set).

8. Incubated cups at 45 °C (114 °F) in NAPCO Controlled Environment Incubator (Model 3500) for ≈ 4 hours (until a pH range of 4.5 to 4.6 was attained).

9. Stored CDPs under refrigeration (4,4 °C (40 °F)) for four days.

10. Diluted CDPs with distilled water to ≈ 12.5% solids, in order to achieve greater uniformity of drying.

11. Poured diluted samples into 1000 ml round bottom flasks.

12. Flash froze diluted samples using dry ice-acetone bath.

13. Freeze-dried samples overnight using a FTS Systems Flexi-Dry™ MP bench-top freeze drier (Model# FD-3-85A-MP).

Total Dietary Fiber (TDF) content of starches and freeze-dried CDPs was determined using AOAC method 2001.03 "Total Dietary Fiber in Foods Containing Resistant Maltodextrin".

TDF retention was calculated according to the formulas:

    **1.** TDF Retention (%) = TDF CDP x 100 / TDF Pre-mix
    **2.** Post-Processing Ingredient TDF = TDF Starch x TDF Retention (%) / 100

Table 8 summarizes TDF and TDF retention for CDPs; results are expressed on a dry basis.

Table 8- TDF and TDF Retention Results of Cultured Dairy Products

| Sample | TDF Starch (% db) | TDF Pre-mix (% db) | TDF CDP (% db) | TDF Retention (%) | Post-Processing Ingredient TDF (% db) |
|---|---|---|---|---|---|
| CDP with 16 | 2.4 | 1.6 | 2.1 | NA | N/A |
| CDP with 17 | 38.2 | 26.3 | 25.6 | 97 | 37.1 |

The result in the table 8 demonstrate that TDF retention of modified starch of the invention in cultured dairy product was 97%.

Example 8 - Retorted Applications

Modified food starches were tested in a retort application using a thermal process typical of a cream-based white sauce to determine process tolerance.

Starches 16 and 17 were utilized at 20% by weight in the retort application.

1. Prepared retort samples according to the formulations listed in Table 9, using a thermal process typical of a cream-based white sauce:

Table 9- Retort Formulations Utilized for Determination of Process Tolerance.

| Ingredients | Percent Weight | |
|---|---|---|
| | Retort Sampl with 16 | Retort Sample with 17 |
| 16 | 20.000 | --- |
| 17 | --- | 20.000 |
| Citric Acid Monohydrate (25% Solution) | 0.210 | 0.122 |
| Distilled Water | 79.790 | 79.878 |
| Totals | 100.000 | 100.000 |

2. Weighed Starch 16 into 1200 ml stainless steel beaker.

3. Added distilled water to 1200 ml stainless steel beaker.

4. Created starch slurry for Starch 16 by mixing starch and water using a VWR High Viscosity Mixer @ 400 RPM for 5 minutes.

5. Created starch slurry for Starch 17 by weighing hot water ($\approx$ 46,1 °C ($\approx$ 115 °F)) into a 1200 ml stainless steel beaker.

6. Turned on VWR High Viscosity Mixer and set to 750 RPM.

7. Weighed Starch 17 separately into a 600 ml beaker,

8. Slowly added Starch 17 to the hot water under agitation; Starch 17 took $\approx$ 15 minutes to fully dissolve.

9. Added 25% citric acid solution to reduce pH to $\approx$ 4.0. (Citric acid level needed to reduce pH to 4.0 was previously determined).

10. Allowed starch slurry to mix for an additional two minutes.

11. Checked pH of starch slurry, while mixing, using a pH meter. Citric acid solution was added, if necessary.

12. Pre-heated starch slurry to 185 °F (85 °C) in a boiling water bath.

13. Mixed slurry before placing it into the boiling water bath.

14. Filled standard 211 x 400 diameter aluminum cans with starch slurry, leaving 3/8 of an inch headspace.

15. Sealed cans and placed into the retort (Stock Retort Pilot-Rotor 900); temperature probes were attached.

16. Processed cans under full water immersion at 250 °F (121.5 °C) for 30 minutes in rotary mode (Processing parameters are listed in Appendix).

17. Opened cans and stirred contents to ensure uniformity before freeze-drying.

18. Poured samples into 1000 ml round bottom flasks.

19. Flash froze diluted samples using dry ice-acetone bath.

20. Freeze-dried retort samples "as-is" the following day using a FTS Systems Flexi-Dry™ MP bench-top freeze drier (Model# FD-3-85A-MP).

Total Dietary Fiber (TDF) content of starches and freeze-dried retort samples was determined using AOAC method 2001.03 "Total Dietary Fiber in Foods Containing Resistant Maltodextrin".

TDF retention was calculated according to the formulas:

1. TDF Retention (%) = TDF Retort Sample x 100 / TDF Pre-mix

2. Post-Processing Ingredient TDF = TDF Starch x TDF Retention (%) / 100

Table 10 summarizes TDF and TDF retention results for retort samples; results are expressed on a dry basis.

Table 10- TDF and TDF Retention Results of Retort Samples

| Sample | TDF Starch (% db) | TDF Pre-mix (% db) | TDF Retort Sample (% db) | TDF Retention (%) | Post-Processing Ingredient TDF (% db) |
|---|---|---|---|---|---|
| Retort Sample with 16 | 2.4 | 2.4 | 2.8 | N/A | N/A |
| Retort Sample with 17 | 38.2 | 38.2 | 35.2 | 92 | 35.2 |

The result in Table 10 show that TDF retention of modified starch of the invention in retorted application was 92%.

Example 9 - Fried Tortilla Chips (Reference)

Modified food starches were tested in a fried tortilla chip application to determine process tolerance.

Instant masa flour was used as the Control. Modified food starches were evaluated at 20% by weight, replacing masa flour. Tortilla chips were prepared using internal pilot plant equipment.

1. Dry-blended tortilla chip pre-mixes in 1-gallon Ziploc® bags according to the formulations listed in Table 11. Once uniform, a sample of the tortilla chip pre-mix was taken.

Table 11- Tortilla Chip Pre-mix Formulations Utilized for Determination of Process Tolerance.

| Ingredients | Percent Weight | | | | |
|---|---|---|---|---|---|
| | Tortilla Chip Pre-mix 1P | Tortilla Chip Pre-mix 2P | Tortilla Chip Pre-mix 3P | Tortilla Chip Pre-mix 4P | Tortilla Chip Pre-mix 5P |
| Instant Masa Flour (Maseca) | 100.00 | 80.00 | 80.00 | 80.00 | 80.00 |
| 1[1] | --- | 20.00 | --- | --- | --- |
| 2[1] | --- | --- | 20.00 | --- | --- |
| 13[1] | --- | --- | --- | 20.00 | --- |
| 11[1] | --- | --- | --- | --- | 20.00 |
| Totals | 100.00 | 100.00 | 100.00 | 100.00 | 100.00 |
| 1) not according to the invention | | | | | |

2. Weighed tortilla chip pre-mix into a Hobart mixing bowl according to the formulations listed in Table 12.

Table 12- Tortilla Chip Formulations Utilized for Determination of Process Tolerance.

| Ingredients | Percent Weight | | | | |
| --- | --- | --- | --- | --- | --- |
| | Tortilla Chip Control | Tortilla Chip with 1 | Tortilla Chip with 2 | Tortilla Chip with 13 | Tortilla Chip with 11 |
| Pre-mix 1P | 65.00 | --- | --- | --- | --- |
| Pre-mix 2P | --- | 65.00 | --- | --- | --- |
| Pre-mix 3P | --- | --- | 65.00 | --- | --- |
| Pre-mix 4P | --- | --- | --- | 65.00 | --- |
| Pre-mix 5P | --- | --- | --- | --- | 65.00 |
| Spring Water | 35.00 | 35.00 | 35.00 | 35.00 | 35.00 |
| Totals | 100.00 | 100.00 | 100.00 | 100.00 | 100.00 |

3. Weighed spring water into a separate container.

4. Attached mixing blade to Hobart mixer.

5. Mixed dry blend for 1 minute on low speed.

6. Slowly added spring water.

7. Mixed dough for an additional minute on low speed.

8. Put dough mixture through noodle machine 6 times at speed 40 with settings for the opening set at (1.5, 6.0) and (1.5, 6.0), to sheet the dough.

9. Placed dough sheet onto metal tray.

10. Cut dough two inch round shapes using dough cutter; excess dough was discarded.

11. Placed tortilla chips into 246 °C (475 °F) oven.

12. Baked tortilla chips for 1 minute.

13. Allowed tortilla chips to equilibrate to ambient temperature for ≈ 10 minutes before frying.

14. Placed a maximum of 5 tortilla chips onto the shaping mold. The shaping mold was used to keep tortilla chips from pillowing.

15. Immersed shaping mold containing the tortilla chips into 191 °C (375 °F) Golden Fry Clear Liquid Shortening (soybean and/or canola oil blend).

16. Fried tortilla chips for 30 seconds using a Pitco Frialator® (Model E14S-QV) deep fat fryer. 17. Removed tortilla chips from the fryer; allowed excess oil to drain into fryer.

18. Placed fried tortilla chips onto metal screens (curvature downward), and allowed excess oil to drain.

19. Repeated frying procedure until all of the tortilla chips were fried.

20. Placed tortilla chips onto trays and allow them to equilibrate to ambient temperature.

21. Transferred tortilla chips into Ziploc® bags for storage.

Total Dietary Fiber (TDF) content of tortilla chip pre-mixes and tortilla chips was determined using AOAC method 2001.03 "Total Dietary Fiber in Foods Containing Resistant Maltodextrin" and AOAC 991.43 "Total, Soluble, and Insoluble Dietary Fiber in Foods.

Tortilla Chip Control, Tortilla Chip Starch "A" and Tortilla Chip Starch "F" were analyzed by AOAC 2001.03.

Tortilla Chip Amioca and Tortilla Chip Starch "J" were analyzed by AOAC 991.43.

TDF retention was calculated according to the formulas:

1. TDF Retention (%) = TDF Tortilla Chip x 100 / TDF Tortilla Chip Pre-mix

2. Post-Processing Ingredient TDF = TDF Starch x TDF Retention / 100

Table 13 summarizes TDF and TDF retention results for tortilla chips; results are expressed on an "as-is" basis.

Table 13- TDF and TDF Retention Results for Tortilla Chips

| Sample | TDF Starch (% wb) | TDF Pre-mix (% wb) | TDF Tortilla Chip (% wb) | TDF Retention (%) | Post-Processing Ingredient TDF (% wb) |
|---|---|---|---|---|---|
| Tortilla Chip Control | N/A | 6.7 | 7.5 | N/A | N/A |
| Tortilla Chip with 1 | 1.0 | 6.2 | 2.7 | 43 | 0.4 |
| Tortilla Chip with 2 | 41.0 | 14.8 | 13.8 | 93 | 38.1 |
| Tortilla Chip with 11 | 16.0 | 9.8 | 7.1 | 73 | 11.7 |
| Tortilla Chip with 13 | 53.2 | 15.8 | 15.7 | 99 | 52.7 |

Data in table 13 demonstrate that modified starches retain 93-99% fiber in the frying process used for tortilla chips.

**Claims**

1. A method of maintaining a high total dietary fiber content comprising:

   processing under harsh conditions a food formulation comprising a modified starch selected from the group consisting of acid/heat and/or alkali/heat dextrinization, and/or chemical modification using reagents selected from the group consisting of

   a) propylene oxide/sodium trimetaphosphate (PO/STMP),
   b) propylene oxide/sodium trimetaphosphate/sodium tripolyphosphate (PO/STMP/STPP),
   c) adipic acetic anhydride (Ad/Ac),
   d) acid converted/propylene oxide (H+/PO),
   e) butyric anhydride (BA), and
   f) propionic anhydride (PA),
   g) succinic anhydride (SA)

   and mixtures thereof, resulting in a processed food composition,
   wherein the processed food composition retains a total dietary fiber content of at least 70% (w/w) of the pre-processed dry blend formulation and
   wherein the food formulation is subjected to processing at conditions of a temperature of greater than about 100°C and/or a pressure greater than about 1 atmosphere (101.325 kPa).

2. The method of claim 1, wherein the starch is modified by acid/heat dextrinization and/or chemical modification using reagents selected from the group consisting of adipic acetic anhydride (Ad/Ac), acid converted/propylene oxide (H+/PO), butyric anhydride (BA), and propionic anhydride (PA), and succinic anhydride (SA).

3. The method of claim 2, wherein the starch is modified by acid/heat dextrinization.

4. The method of any one of the previous claims, wherein the food formulation is processed by a process selected from the group consisting of homogenization, pasteurization, ultra-high temperature (UHT) packaging, and retorting.

5. The method of any one of the previous claims, wherein the food formulation is extruded at a Specific Mechanical Energy (SME) of at least 130 Wh/kg and a PT of at least 160°C.

6. The method of claim 5, wherein the food formulation is extruded at a Specific Mechanical Energy (SME) of at least 160 Wh/kg and a PT of at least 190°C.

7. The method of any one of the previous claims, wherein the processed food composition retains a total dietary fiber content of at least 85% (w/w) of the pre-processed dry blend formulation.

8. The method of claim 7, wherein the processed food composition retains a total dietary fiber content of at least 95% (w/w) of the pre-processed dry blend formulation.

9. The method of any one of the previous claims, wherein the extruded food composition has a bulk density no greater than an extruded food composition without the modified starch.

10. The method of claim 9, wherein the extruded food composition has a bulk density at least 5% less than an extruded food composition without the modified starch.

11. The method of any one of the previous claims, wherein the processed food composition has a total dietary fiber content of from 2 to 50% (w/w) greater than a processed food composition without the modified starch.

12. The method of claim 11, wherein the processed food composition has a total dietary fiber content of from 2 to 35% (w/w) greater than a processed food composition without the modified starch.

13. The method of claim 12, wherein the processed food composition has a total dietary fiber content of from 3 to 15% (w/w) greater than a processed food composition without the modified starch.

14. The method of claim 12, wherein the processed food composition has a total dietary fiber content of from 3 to 10% (w/w) greater than a processed food composition without the modified starch.


**Patentansprüche**

1. Verfahren zum Erhalten eines hohen Gehalts an Gesamtballaststoffen, umfassend:

Unter rauen Bedingungen Verarbeiten einer Lebensmittelzubereitung, umfassend eine modifizierte Stärke, ausgewählt aus der Gruppe bestehend aus Säure/Hitze und/oder Lauge/Hitze Dextrinisierung und/oder chemischer Modifizierung unter Verwendung von Reagenzien ausgewählt aus der Gruppe bestehend aus:

a) Propylenoxid/Natriumtrimetaphosphat (PO/STMP),
b) Propylenoxid/Natriumtrimetaphosphat/Natriumtripolyphosphat (PO/STMP/STPP),
c) Anhydrid aus Adipin- und Essigsäure (Ad/Ac),
d) Säureumgewandeltem/Propylenoxid (H+/PO),
e) Buttersäureanhydrid (BA), und
f) Propansäureanhydrid (PA),
g) Bernsteinsäureanhydrid (SA)
und Mischungen davon, ergebend eine verarbeitete
Lebensmittelzusammensetzung,
wobei die verarbeitete Lebensmittelzusammensetzung einen Gehalt an Gesamtballaststoffen von mindestens 70% (w/w) der vorverarbeiteten, trockenen Mischzubereitung beibehält und
wobei die Lebensmittelzubereitung einem Verarbeiten bei Bedingungen einer Temperatur von größer als etwa 100°C und/oder einem Druck größer als etwa 1 Atmosphäre (101.325 kPa) unterworfen wird.

2. Verfahren nach Anspruch 1, wobei die Stärke durch Säure/Hitze Dextrinisierung und/oder chemische Modifizierung unter Verwendung von Reagenzien ausgewählt aus der Gruppe bestehend aus Anhydrid aus Adipin- und Essigsäure (Ad/Ac), säureumgewandeltem/Propylenoxid (H+/PO), Buttersäureanhydrid (BA) und Propansäureanhydrid (PA) und Bernsteinsäureanhydrid (SA) modifiziert wird.

3. Verfahren nach Anspruch 2, wobei die Stärke durch Säure/Hitze Dextrinisierung modifiziert wird.

4. Verfahren nach irgendeinem der vorherigen Ansprüche, wobei die Lebensmittelzubereitung nach einem Verfahren verarbeitet wird, das aus der Gruppe, bestehend aus Homogenisierung, Pasteurisierung, Ultrahochtemperatur-(UHT)-Verpacken und Retortieren, ausgewählt ist.

**5.** Verfahren nach irgendeinem der vorherigen Ansprüche, wobei die Lebensmittelzubereitung bei einer spezifischen mechanischen Energie (SME) von mindestens 130 Wh/kg und einer PT von mindestens 160°C extrudiert wird.

**6.** Verfahren nach Anspruch 5, wobei die Lebensmittelzubereitung bei einer spezifischen mechanischen Energie (SME) von mindestens 160 Wh/kg und einer PT von mindestens 190°C extrudiert wird.

**7.** Verfahren nach irgendeinem der vorherigen Ansprüche, wobei die verarbeitete Lebensmittelzusammensetzung einen Gehalt an Gesamtballaststoffen von mindestens 85% (w/w) der vorverarbeiteten, trockenen Mischzubereitung beibehält.

**8.** Verfahren nach Anspruch 7, wobei die die verarbeitete Lebensmittelzusammensetzung einen Gehalt an Gesamtballaststoffen von mindestens 95% (w/w) der vorverarbeiteten, trockenen Mischzubereitung beibehält.

**9.** Verfahren nach irgendeinem der vorherigen Ansprüche, wobei die extrudierte Lebensmittelzusammensetzung eine Schüttdichte aufweist, die nicht größer ist als die einer extrudierten Lebensmittelzusammensetzung ohne die modifizierte Stärke.

**10.** Verfahren nach Anspruch 9, wobei die extrudierte Lebensmittelzusammensetzung eine Schüttdichte aufweist, die mindestens 5% geringer ist als die einer extrudierten Lebensmittelzusammensetzung ohne die modifizierte Stärke.

**11.** Verfahren nach irgendeinem der vorherigen Ansprüche, wobei die verarbeitete Lebensmittelzusammensetzung einen Gehalt an Gesamtballaststoffen aufweist, der von 2 bis 50% (w/w) größer ist als der einer verarbeiteten Lebensmittelzusammensetzung ohne die modifizierte Stärke.

**12.** Verfahren nach Anspruch 11, wobei die verarbeitete Lebensmittelzusammensetzung einen Gehalt an Gesamtballaststoffen aufweist, der von 2 bis 35% (w/w) größer ist als der einer verarbeiteten Lebensmittelzusammensetzung ohne die modifizierte Stärke.

**13.** Verfahren nach Anspruch 12, wobei die verarbeitete Lebensmittelzusammensetzung einen Gehalt an Gesamtballaststoffen aufweist, der von 3 bis 15% (w/w) größer ist als der einer verarbeiteten Lebensmittelzusammensetzung ohne die modifizierte Stärke.

**14.** Verfahren nach Anspruch 12, wobei die verarbeitete Lebensmittelzusammensetzung einen Gehalt an Gesamtballaststoffen aufweist, der von 3 bis 10% (w/w) größer ist als der einer verarbeiteten Lebensmittelzusammensetzung ohne die modifizierte Stärke.

## Revendications

**1.** Procédé de maintien d'une teneur totale élevée en fibres alimentaires comprenant le fiait :

de traiter, dans des conditions drastiques, une formulation alimentaire comprenant un amidon modifié, choisies dans le groupe consistant en une dextrinisation acide/par la chaleur et/ou alcaline/par la chaleur et/ou une modification chimique en utilisant des réactifs choisis dans le groupe consistant en :

a) oxyde de propylène/trimétaphosphate de sodium (PO/STMP),
b) oxyde de propylène/trimétaphosphate de sodium/ tripolyphosphate de sodium (PO/STMP/STPP),
c) anhydride adipique-acétique (Ad/Ac),
d) réactif à conversion acide/oxyde de propylène (H+/PO),
e) anhydride butyrique (BA), et
f) anhydride propionique (PA),
g) anhydride succinique (SA)

et leurs mélanges, ce qui conduit à une composition alimentaire traitée,
dans lequel la composition alimentaire traitée conserve une teneur totale en fibres alimentaires d'au moins 70 % (p/p) de la formulation de mélange sec prétraitée, et

dans lequel la formulation alimentaire est soumise à un traitement dans des conditions de température supérieure à environ 100°C et/ou de pression supérieure à environ 1 atmosphère (101,325 kPa).

2. Procédé de la revendication 1, dans lequel l'amidon est modifié par une dextrinisation acide/par la chaleur et/ou une modification chimique en utilisant des réactifs choisis dans le groupe consistant en l'anhydride adipique-acétique (Ad/Ac), réactif à conversion acide/oxyde de propylène (H+/PO), l'anhydride butyrique (BA), et l'anhydride propionique (PA) et l'anhydride succinique (SA).

3. Procédé de la revendication 2, dans lequel l'amidon est modifié par une dextrinisation acide/par la chaleur.

4. Procédé de l'une quelconque des revendications précédentes, dans lequel la formulation alimentaire est traitée par un procédé choisi dans le groupe consistant en une homogénéisation, une pasteurisation, un conditionnement à ultra-haute température (UHT), et un autoclavage.

5. Procédé de l'une quelconque des revendications précédentes, dans lequel la formulation alimentaire est extrudée à une énergie mécanique spécifique (SME) d'au moins 130 Wh/kg et à une PT d'au moins 160°C.

6. Procédé de la revendication 5, dans lequel la formulation alimentaire est extrudée à une énergie mécanique spécifique (SME) d'au moins 160 Wh/kg et à une PT d'au moins 190°C.

7. Procédé de l'une quelconque des revendications précédentes, dans lequel la composition alimentaire traitée conserve une teneur totale en fibres alimentaires d'au moins 85 % (p/p) de la formulation de mélange sec prétraitée.

8. Procédé de la revendication 7, dans lequel la composition alimentaire traitée conserve une teneur totale en fibres alimentaires d'au moins 95 % (p/p) de la formulation de mélange sec prétraitée.

9. Procédé de l'une quelconque des revendications précédentes, dans lequel la composition alimentaire extrudée a une masse volumique apparente non supérieure à celle d'une composition alimentaire extrudée sans l'amidon modifié.

10. Procédé de la revendication 9, dans lequel la composition alimentaire extrudée a une masse volumique apparente inférieure d'au moins 5 % à celle d'une composition alimentaire extrudée sans l'amidon modifié.

11. Procédé de l'une quelconque des revendications précédentes, dans lequel la composition alimentaire traitée a une teneur totale en fibres alimentaires supérieure de 2 à 50 % (p/p) à celle d'une composition alimentaire traitée sans l'amidon modifié.

12. Procédé de la revendication 11, dans lequel la composition alimentaire traitée a une teneur totale en fibres alimentaires supérieure de 2 à 35 % (p/p) à celle d'une composition alimentaire traitée sans l'amidon modifié.

13. Procédé de la revendication 12, dans lequel la composition alimentaire traitée a une teneur totale en fibres alimentaires supérieure de 3 à 15 % (p/p) à celle d'une composition alimentaire traitée sans l'amidon modifié.

14. Procédé de la revendication 12, dans lequel la composition alimentaire traitée a une teneur totale en fibres alimentaires supérieure de 3 à 10 % (p/p) à celle d'une composition alimentaire traitée sans l'amidon modifié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4465702 A
- US 5037929 A
- US 5131953 A
- US 5149799 A

- EP 554818 A, Kasica
- US 4477480 A, Seidel
- US 5187272 A, Bertalan

**Non-patent literature cited in the description**

- **D.T. GORDON ; K. OKUMA.** Determination of Total Dietary Fiber in Selected Foods Containing Resistant Maltodextrin by Enzymatic-Gravimetric Method and Liquid Chromatography: Collaborative Study. *J. AOAC,* 2002, vol. 85, 435-444

- Modified Starches: Properties and Uses. CRC Press, Inc, 1986
- Production and Use of Pregelatinized Starch. Starch: Chemistry and Technology, Vol. III- Industrial Aspects. Academic Press, 1967, vol. III